# EUROPEAN PATENT APPLICATION

(11) **EP 2 249 053 A1**
(43) Date of publication of application: **10.11.2010**
(21) Application number: 09708158.2
(22) Date of filing: 08.01.2009
(51) Int. Cl.: F16D 3/84, F16D 3/20

(54) **INSTALLATION STRUCTURE FOR BOOT FOR CONSTANT VELOCITY UNIVERSAL JOINT AND METHOD OF MANUFACTURING CONSTANT VELOCITY UNIVERSAL JOINT**

(30) Priority: 05.02.2008 JP 2008025479
(71) Applicant: NTN Corporation, Osaka-shi, Osaka 550-0003 (JP); Osaka University, Suita-shi Osaka 565-0871 (JP)
(72) Inventor: NAKAJIMA, Tatsuo, Iwata-shi Shizuoka 438-0037 (JP); NAKAGAWA, Naoki, Iwata-shi Shizuoka 438-0037 (JP); KATAYAMA, Seiji, Suita-shi Osaka 565-0871 (JP); KAWAHITO, Yousuke, Suita-shi Osaka 565-0871 (JP)
(74) Representative: Grünecker, Kinkeldey, Stockmair & Schwanhäusser Anwaltssozietät
(86) International application number: PCT/JP2009/050122
(87) International publication number: WO 2009/098912

(57) **Abstract**

Provided is a mounting structure for a boot for a constant velocity universal joint, which is capable of ensuring a stable sealing performance at low cost. The resin boot (1) for the constant velocity universal joint includes a smaller-diameter end portion (2) and a larger-diameter end portion (3), each of which has a cylindrical shape. The smaller-diameter end portion (2) of the boot (1) is fixed to a shaft (17) constituting an inner member, and the larger-diameter end portion (3) is fixed to an outer joint member (11) serving as an outer member. An inner peripheral surface of the smaller-diameter end portion (2) of the boot (1) is integrally bonded to an outer peripheral surface of a boot-mounting portion (18) of the shaft (17) in an abutting state due to a physical interaction between a resin constituting the boot (1) and a metal constituting the shaft (17). Further, an inner peripheral surface of the larger-diameter end portion (3) of the boot (1) is integrally bonded to an outer peripheral surface of a boot-mounting portion (19) of the outer joint member (11) in an abutting state due to the physical interaction between the resin constituting the boot (1) and the metal constituting the outer joint member (11).

## Description

### Technical Field

The present invention relates to a mounting structure for a boot for a constant velocity universal joint and a method of manufacturing a constant velocity universal joint.

### Background Art

For the purpose of preventing intrusion of foreign matters such as dust into a joint and preventing leakage of grease sealed inside the joint, a boot (boot for constant velocity universal joint) is mounted onto a constant velocity universal joint incorporated in a power transmission mechanism in automobiles or various industrial machineries, for example.

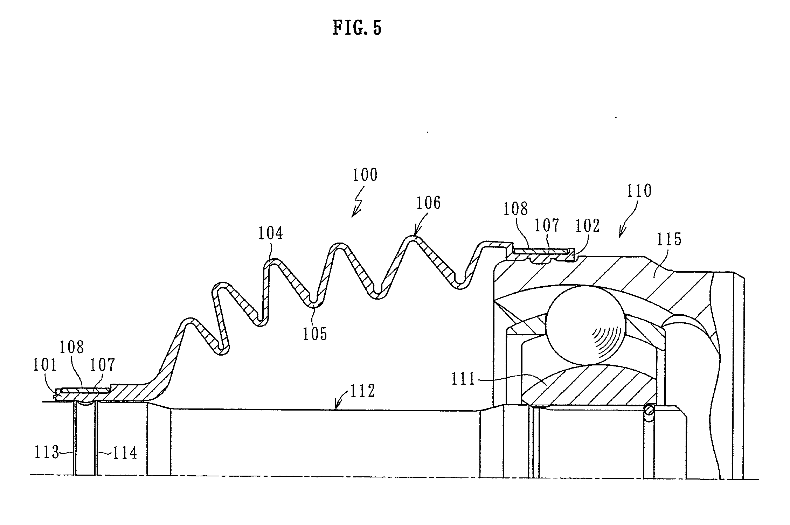

A boot 100 of this type includes, as illustrated in FIG. 5, for example, a smaller-diameter end portion 101 and a larger-diameter end portion 102, each of which has a cylindrical shape. The smaller-diameter end portion 101 is connected to the larger-diameter end portion 102 through intermediation of a bellows portion 106 in which peak portions 104 and valley portions 105 are alternately formed. Outer peripheries of the smaller-diameter end portion 101 and the larger-diameter end portion 102 of the boot 100 are fastened with boot bands 108, respectively. In this manner, the smaller-diameter end portion 101 and the larger-diameter end portion 102 of the boot 100 are fixed to a first mating member and a second mating member, respectively. In the illustrated example, the first mating member is a shaft 112 extending from an inner joint member 111 of a constant velocity universal joint 110, and the second mating member is an outer joint member 115 of the constant velocity universal joint 110.

In outer peripheral surfaces of the smaller-diameter end portion 101 and the larger-diameter end portion 102 of the boot 100, there are provided annular concave grooves 107, respectively. Onto each of the concave grooves 107, the boot band 108 is fitted. Meanwhile, of an outer peripheral surface of the shaft 112, in a fixing portion for the smaller-diameter end portion 101, there are provided two annular protrusions 113, 114. By the way, the boot 100 is generally formed of a resin material. In this case, of the smaller-diameterend portion101andthelarger-diameterend portion 102, a sealing performance particularly in the smaller-diameter end portion 101 is ensured in the following manner. Specifically, the boot band 108 is tightened so that the annular protrusions 113, 114 provided in the shaft 112 are caused to bite in a radially inner surface of the smaller-diameter end portion 101 (see, for example, Patent Document 1).
Patent Document 1: Japanese Utility Model Application Laid-open No. Hei 04-128536

### Summary of Invention

### Technical Problems

In order to ensure a stable sealing performance in the above-mentioned structure, it is necessary to accurately tighten the boot band 108 with a predetermined interference. However, it is difficult to easily perform such highly accurate tightening without causing variation between the respective boot bands. In particular, in a case where, for the purpose of improving the sealing performance, the outer peripheral surface of the first mating member (shaft 112) is provided with the annular protrusions as described above, it becomes more difficult to accurately tighten the boot band 108. Due to the difficulty in tightening of the boot band and to an increase of the number of parts resulting from use of the boot bands 108, an increase of the cost for the constant velocity universal joint is inevitable.

Further, the resin boot is generally die-molded. In a case where the outer peripheral surfaces of the smaller-diameter end portion 101 and the larger-diameter end portion 102 are provided with the concave grooves 107 as described above, a molding die for the boot 100 becomes complicated. In addition, in the above-mentioned structure, the shaft 112 is provided with the annular protrusions 113,114. Thus, the shape of the shaft 112 is correspondingly complicated. The complication of the molding die and of member shape leads to the increase of the cost for the constant velocity universal joint.

The present invention has been made in view of the above-mentioned problems, and it is an obj ect of the present invention to provide a mounting structure for a boot for a constant velocity universal joint, which is capable of ensuring a stable sealing performance at low cost.

### Solution to Problems

In order to solve the above-mentioned problems, according to the present invention, there is provided a mounting structure for a boot for a constant velocity universal joint, including a resin boot including an end portion that is fixed to a mating member thereof made of a metal, in which, due to a physical interaction between a resin constituting the resin boot and the metal constituting the mating member, a mounting surface of the end portion of the resin boot is integrally bonded to a surface to be mounted of the mating member in an abutting state.

As described above, due to the physical interaction between the resin constituting the resin boot and the metal constituting the mating member, the mounting surface of the end portion of the resin boot is integrally bonded to the surface to be mounted of the mating member in the abutting state. Thus, it is possible to rigidly fix the two members to be fixed to each other without improving the shape of the both members. In addition, the above-mentioned fixing with high strength can be performed easily and accurately. Further, it is possible to omit a boot band. Still further, it is possible to simplify the shape of the outer peripheral surface of the end portion of the boot due to omission of the boot band. As a result, it is possible to ensure a stable sealing performance at low cost. The above-mentioned physical interaction is also referred to as Van der Waals force.

As the above-mentioned specific structure, it is possible to set the mating member to be any one or both of an outer member and an inner member, which are provided to be allowed to be displaced relative to each other and constitute the constant velocity universal joint. The relative displacement includes: a case where only an angular displacement is allowed; and a case where the angular displacement and an axial displacement are allowed. That is, the present invention can be adopted irrespective of a so-called fixed type constant velocity universal joint and a so-called plunging type constant velocity universal joint.

As specific means for causing the physical interaction between the resin constituting the resin boot and the metal constituting the mating member, irradiating the mating member with a laser is conceivable. It is intended to bond and integrate the end portion of the boot to the mating member by using a method referred to as a so-called laser welding method. The laser bonding is a method of bonding the resin constituting the boot to the metal constituting the mating member by Van der Waals force in the following manner. Specifically, for example, under a state in which the mounting surface of the end portion of the boot and the surface to be mounted of the mating member are abutted against each other, the mating member is irradiated with a laser. Thus, the resin (resin material constituting the boot) in a vicinity of an abutted portion of both of the resinmaterial constituting the boot and the metal constituting the mating member is selectively heated up to a melting temperature (melting point) or more thereof. The laser bonding is capable of rigidly fixing the both for an extremely short period of time. Note that, the laser may be radiated directly to the mating member, or the laser may be radiated to the mating member indirectly, that is, while causing the laser to penetrate the boot.

The resin boot may include a so-called rubber boot and a so-called thermoplastic elastomer boot. However, the resin boot desirably includes the thermoplastic elastomer boot exhibiting properties excellent in a moldability, a fatigue resistance, a high-speed rotation, and the like. In this case, a usable thermoplastic elastomer may include various well-known thermoplastic elastomers, such as a polyester-based elastomer, a polyurethane-based elastomer, a polyolefin-based elastomer, a polyamide-based elastomer, a polystyrene-based elastomer, a vinyl chloride-based elastomer, and a fluorine-based elastomer. However, in view of a mechanical strength, a thermal resistance, an oil resistance, and further, a strength of the physical interaction (Van der Waals force) between the resin constituting the boot and the metal constituting the mating member, a polyester-based thermoplastic elastomer is particularly suitable.

The surface to be mounted of the mating member may be subjected to rustproofing such as Parkerizing. Even in this case, it is possible to rigidly bond the resin boot to the mating member.

### Advantageous Effects of Invention

As described above, according to the present invention, it is possible to ensure a stable sealing performance at low cost. With this, it is possible to provide a constant velocity universal joint excellent in reliability and endurance at low cost.

### Description of Embodiments

Hereinafter, embodiments of the present invention are described in detail with reference to the drawings.

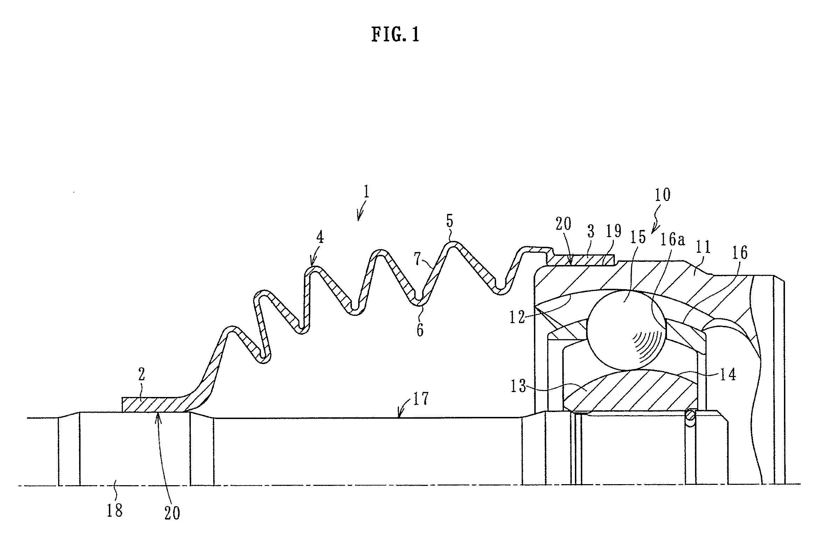

FIG. 1 illustrates a first embodiment of a constant velocity universal joint and a boot for a constant velocity universal joint (hereinafter, merely referred to as boot), to which a mounting structure according to the present invention is adopted. A constant velocity universal joint 10 illustrated in the drawing mainly includes: an outer joint member 11 serving as an outer member, which includes a plurality of track grooves 12 formed in an inner peripheral surface thereof; an inner joint member 13 including a plurality of track grooves 14 formed in an outer peripheral surface thereof; a plurality of balls 15 respectively arranged in ball tracks formed through cooperation of the track grooves 12 of the outer joint member 11 and the track grooves 14 of the inner joint member 13; and a cage 16 including pockets 16a for receiving the balls 15. To an inner periphery of the inner joint member 13, a shaft 17 is coupled through intermediation of torque transmission means such as a serration or a spline. The shaft 17 and the inner joint member 13 constitute an inner member. Note that, the inner member may include one obtained by providing the inner joint member 13 and the shaft 17 to be integrated to each other.

The constant velocity universal joint 10 in the illustrated example is a so-called fixed-type constant velocity universal joint in which only a relative angular displacement is allowed to the outer member and the inner member. However, it is sufficient that the constant velocity universal joint 10 is capable of mounting the boot 1 thereon. Therefore, the constant velocity universal joint 10 may include a plunging-type constant velocity universal joint in which the outer member and the inner member perform the angular displacement and an axial displacement relative to each other.

The boot 1 includes a smaller-diameter end portion 2 and a larger-diameter end portion 3, each of which has a cylindrical shape. The smaller-diameter end portion 2 is connected through intermediation of a bellows portion 7 to the larger-diameter end portion 3. The bellows portion 7 includes: peak portions 5 and valley portions 6, which are alternately arranged along an axial direction thereof; and inclined portions 7 connecting the both portions. The smaller-diameter end portion 2 is fixed to the shaft 17, and the larger-diameter end portion 3 is fixed to the outer joint member 11.

The boot 1 is formed of a re sin mate rial mainly containing a thermoplastic elastomer such as a polyester-based elastomer, a polyurethane-based elastomer, a polyolefin-based elastomer, a polyamide-based elastomer, a polystyrene-based elastomer, a vinyl chloride-based elastomer, or a fluorine-based elastomer. In this embodiment, among the above-mentioned elastomers, the boot 1 is formed of a resin material mainly containing a polyester-based thermoplastic elastomer (thermoplastic polyester elastomer) exhibiting properties excellent in a mechanical strength, a thermal resistance, an oil resistance, and the like for its cost. Further, though the details are to be described later, the polyester-based thermoplastic elastomer is suitable. It is because the polyester-based thermoplastic elastomer is capable of causing relatively large Van der Waals force between a metal constituting the shaft 17 and a metal constituting the outer joint member 11, in other words, capable of ensuring a large bonding strength between the boot 1 and the shaft 17 and between the boot 1 and the outer joint member 11. Though a manufacturing method for the boot 1 is not particularly limited, it is possible to adopt blow molding such as extrusionblowmolding, injectionblowmolding, press blowmolding, injection molding, or the like. The thermoplastic polyester elastomer mainly includes a polyester block copolymer formed of a high-melting-point, crystalline polyester copolymer segment and a low-melting-point polymer segment.

Examples of the high-melting-point, crystalline polyester copolymer segment of the polyester block copolymer for forming the thermoplastic polyester elastomer include polyesters each formed of an aromatic dicarboxylic acid or ester-forming derivative thereof and an aliphatic diol. Of those, polybutylene terephthalate derived from terephthalic acid and/or dimethyl terephthalate and 1,4-butanediol is particularly suitable. Of course, the high-melting-point, crystalline polyester copolymer segment selectable is not limited to those examples. Examples of the segment other than those described above which may be used include : polyesters derived from a dicarboxylic acid component such as isophthalic acid, phthalic acid, naphthalene-2,6-dicarboxylic acid, or an ester-forming derivative thereof and a diol having a molecular weight of 300 or less such as an alicyclic diol such as ethylene glycol, trimethylene glycol, pentamethylene glycol, hexamethylene glycol, neopentyl glycol, or decamethylene glycol, or an aromatic diol such as bis(p-hydroxy)diphenyl, bis(p-hydroxyphenyl)propane, 4,4'-dihydroxy-p-terphenyl, or 4,4'-p-quaterphenyl; and copolymerized polyesters containing two or more kinds of dicarboxylic acid components diol components in combination. Further, aliphatic dicarboxylic acids such as adipic acid or sebacic acid which are copolymerized may be used. Still further, trifunctional or higher polyfunctional carboxylic acid components, polyfunctional oxyacid components, polyfunctional hydroxy components, and the like copolymerized in the range of 5 mol% or less may be used.

Further, the low-melting-point polymer segment of the polyester block copolymer for forming the thermoplastic polyester elastomer is an aliphatic polyether and/or aliphatic polyester, and particularly suitably has a number average molecular weight after copolymerization of approximately 300 to 6000. Examples of the aliphatic polyether which may be used include poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide addition polymer of poly (propylene oxide) glycol, and a copolymer of ethylene oxide and tetrahydrofuran.

Further, examples of the aliphatic polyester which may be used include polycaprolactone, polyenantholactone, polycaprylolcatone, polybutylene adipate, and polyethylene adipate. Of those, from the viewpoint of elastic characteristics of the polyester block copolymer, poly(tetramethylene oxide) glycol, an ethylene oxide addition polymer of poly(propylene oxide) glycol, and polycaprolactone, polybutylene adipate, and the like are particularly suitable.

The amount of low-melting-point polymer segment compolymerized in the polyester block copolymer is preferably 10 to 80 mass% and more preferably 15 to 75 mass%.

It should be noted that the resin material for forming the boot 1 may be appropriately added with any kind of additive such as antioxidants, light stabilizers, hydrolysis inhibitors, colorants (such as carbon black, pigments, or dyes), or flame retardants, as long as they do not adversely affect the bonding strength of the shaft 17 and the outer joint member 11 of the boot 1.

The shaft 17 is formed into a hollow shaft or a solid shaft of carbon steel typified by S40C, SBM40C, or the like, in particular, carbon steel subjected to quenching such as induction quenching. The shaft 17 is provided with a boot-mounting portion 18 having a smooth cylindrical surface shape at a position to which the shaft protrudes by a predetermined amount from the outer joint member 11. Further, an inner peripheral surface of the smaller-diameter end portion 2 of the boot 1 is integrally bonded to an outer peripheral surface of the boot-mounting portion 18 in an abutting state due to a physical interaction between the resin constituting the boot 1 and the metal constituting the shaft 17. With this, the smaller-diameter end portion 2 of the boot 1 is fixed to the boot-mounting portion 18 of the shaft 17. Specifically, in this case, the inner peripheral surface of the smaller-diameter end portion 2 of the boot 1 is a "mounting surface" in the present invention, and the outer peripheral surface of the boot-mounting portion 18 of the shaft 17 is a "surface to be mounted" in the present invention.

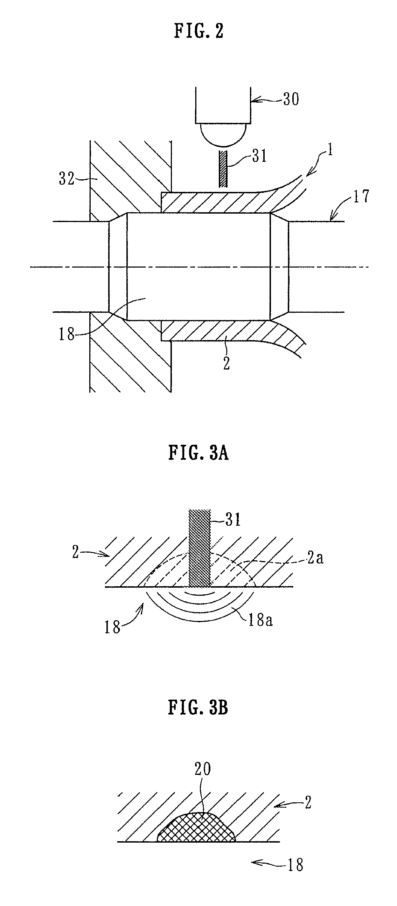

Here, amethodoffixingthesmaller-diameterendportion 2 of the boot 1 onto the boot-mounting portion 18 of the shaft 17 is described in detail with reference to FIG. 2 and FIG. 3.

The manufacturing apparatus illustrated in FIG. 2 mainly includes: a laser irradiation device 30 arranged on a radially outer side of the smaller-diameter end portion 2 of the boot 1; and a clamping mechanism 32 for holding the inner peripheral surface (mounting surface) of the smaller-diameter end portion 2 of the boot 1 and the outer peripheral surface (surface to be mounted) of the boot-mounting portion 18 of the shaft 17 in the abutting state.

The laser irradiation device 30 includes an excitation source such as a discharge lump or a semiconductor laser. The laser irradiation device 30 radiates a laser beam 31 having predetermined power from a tip thereof toward the smaller-diameter end portion 2 of the boot 1. As the laser, it is possible to use an yttrium aluminum garnet (YAG) laser by lamp laser-excitation, a semiconductor laser being a near infrared laser similarly to the YAG laser, or a fiber laser. However, in this embodiment, in view of a beam quality, or the like of the laser beam 31, a laser diode (LD) excitation mode neodymium-doped yttrium aluminum garnet (Nd:YAG) laser (wavelength: 1,064 nm, manufactured by ROFIN-Baasel Japan Corporation) is used. As an irradiation mode in the laser irradiation device 30 for the laser beam 31, a continuous mode or a pulse mode may be adopted. However, the continuous mode is particularly suitable because a bonded portion 20 with high accuracy and high strength can be formed through the continuous mode. Further, the power of the laser beam 31 to be radiated is arbitrarily adjustable.

Note that, though not shown, between the laser irradiation device 30 and the smaller-diameter end portion 2 of the boot 1, there may be provided beam-diameter controlling means including a convex lens and a concave lens for controlling a beam diameter of the laser beam 31. Further, though not shown similarly to the above description, it is also possible to provide a shielding gas injector for injecting argon gas, nitrogen gas, oxygen gas, or mixed gas thereof for cooling a vicinity of a portion irradiated with a laser during bonding work.

In the manufacturing apparatus with the above-mentioned structure, first, the smaller-diameter end portion 2 of the boot 1 is fitted onto the boot-mounting portion 18 of the shaft 17. After that, the boot 1 and the shaft 17 are sandwiched by the clamping mechanism 32. With this, the inner peripheral surface (mounting surface) of the smaller-diameter end portion 2 of the boot 1 and the outer peripheral surface (surface to be mounted) of the boot-mounting portion 18 of the shaft 17 are held in the abutting state. Next, as illustrated in FIG. 3A, when the laser beam 31 is radiated from the laser irradiation device 30, the laser beam 31 penetrates the smaller-diameter end portion 2 of the boot 1. Then, the laser beam 31 arrives in a surface of the boot-mounting portion 18 of the shaft 17. As a result, a region to be irradiated (portion to be irradiated 18a) of the boot-mounting portion 18 is heated. The laser beam 31 is continued to be radiated until the portion to be irradiated 18a is heated up to a melting point or more in temperature of the resin constituting the boot 1. After that, a molten portion 2a (portion indicated by the dotted line in the drawing) in which the resin is molten is formed in a part of the inner peripheral surface of the smaller-diameter end portion 2, the part being held in contact with the portion to be irradiated 18a. Then, after the laser beam 31 is radiated for a predetermined period of time, radiation of the laser beam 31 is stopped. As a result, due to molten liquid around the molten portion 2a and to a pressing force applied from the clamping mechanism 32, there is caused a physical interaction between the resin (thermoplastic elastomer) constituting the boot 1 and the metal constituting the shaft 17. Thus, the both are bonded by Van der Waals force, and there is formed the bonded portion 20 (see FIG. 3B).

As described above, the bonded portion 20 is formed in a circumferential predetermined region between the smaller-diameter end portion 2 of the boot 1 and the boot-mounting portion 18 of the shaft 17. After that, the laser irradiation device 30 and an assembly (shaft 17 including boot 1 fixed thereto) are caused to rotate relative to each other. Then, a bonded portion 20 is formed in a circumferential another region between the smaller-diameter end portion 2 and the boot-mounting portion 18 in the above-mentioned manner. Note that, it is also possible to form the bonded portion 20 into a shape uncontinuous in the circumferential direction in addition to forming the bonded portion 20 into an annular ring shape continuous in the circumferential direction. The predetermined bonded portion 20 is formed as described above. As a result, the inner peripheral surface (mounting surface) of the smaller-diameter end portion 2 of the boot 1 is integrally bonded in the abutting state to the outer peripheral surface (surface to be mounted) of the boot-mounting portion 18 of the shaft 17.

Note that, upon the bonding integration of the both (formation of the bonded portion 20), if the power of the laser beam 31 to be radiated is excessive, there is a fear that the portion to be irradiated 18a of the shaft 17 is melted. In order to prevent the above-mentioned circumstance, the power of the laser beam 31 is desirably set to range from 200 to 900 W. In this embodiment, the power of the laser beam 31 is set to 800 W. Further, a beam diameter of the laser beam 31, which is radiated to the portion to be irradiated 18a of the shaft 17, is desirably set to Φ0.6 mm or more. That is because, if the beam diameter is extremely small, formation of the bonded portion 20 needs a lot of time. Note that, in this embodiment, the following condition setting is performed. Specifically, in the condition setting, a portion shifted from a focus position of the laser beam 31 is radiated to the portion to be irradiated 18a of the shaft 17. Thus, the portion to be irradiated 18a is prevented from being melted. In addition, there are achieved enlargement of the beam diameter, that is, enlargement in area of the bonded portion 20 which may be formed for a one cycle of beam radiation.

The outer joint member 11, similarly to the shaft 17, is formed into a cup shape of carbon steel typified by S40C, SBM40C, or the like, in particular, carbon steel subjected to quenching such as induction quenching. In an opening-portion outer peripheral surface of the outer joint member 11, there is provided a boot-mounting portion 19 having a smooth cylindrical surface shape. The larger-diameter end portion 3 of the boot 1 is integrally bonded to an outer peripheral surface of the boot-mounting portion 19 of the outer joint member 11 in an abutting state due to a physical interaction between the resin constituting the boot 1 and the metal constituting the outer joint member 11. With this, the larger-diameter end portion 3 of the boot 1 is fixed to the boot-mounting portion 19 of the outer j oint member 11. Specifically, in this case, the inner peripheral surface of the larger-diameter end portion 3 of the boot 1 is a "mounting surface" in the present invention, and the outer peripheral surface of the boot-mounting portion 19 of the outer joint member 11 is a "surface to be mounted" in the present invention. Note that, a method of causing the above-mentioned physical interaction (method of forming the bonded portion 20) conforms to FIG. 2 and FIG. 3, and hence repeated description thereof is omitted.

As described above, in the present invention, due to the physical interaction between the resin constituting the boot 1 and the metal constituting the shaft 17 serving as a mating member thereof, the inner peripheral surface (mounting surface) of the smaller-diameter end portion 2 of the boot 1 is integrally bonded to the outer peripheral surface (surface to be mounted) of the boot-mounting portion 18 of the shaft 17 in the abutting state. Therefore, without improving the shapes of the inner peripheral surface of the smaller-diameter end portion 2 of the boot 1 and the outer peripheral surface of the boot-mounting portion 18 of the shaft 17, which are to be fixed to each other, it is possible to fix the both to each other with high strength. In addition, the above-mentioned fixing with high strength can be performed easily and accurately. Further, it is possible to omit a boot band conventionally used for fixing the both of the inner peripheral surface of the smaller-diameter end portion 2 of the boot 1 and the outer peripheral surface of the boot-mounting portion 18 of the shaft 17. Still further, it is possible to simplify the shape of the smaller-diameter end portion 2 of the boot 1 along with omission of the boot band. Therefore, there is obtained a mounting structure for a boot for a constant velocity universal joint, which ensures a stable sealing performance at low cost. With this, it is possible to provide the constant velocity universal joint excellent in reliability and endurance at low cost.

In this embodiment, in addition, the larger-diameter end portion 3 of the boot 1 is fixed to the outer joint member 11 by the same method described above. Therefore, a more reduction in cost of the constant velocity universal joint 10 is achieved.

Further, by a laser welding method, it is possible to inhibit or prevent burr generation, which is troublesome when two members are fixed to each other, the two members being needed to be fixed to each other by a method accompanied by vibration, such as ultrasonic bonding. In addition, in the laser welding method, there is no constraint for the adaptable size and shape of components of the joint, and hence a designing degree of freedom of the joint is not deteriorated. Further, dust and the like are not generated along with bonding. Therefore, the laser welding method is safe for workers and it is unnecessary to provide a dust remover or the like. Further, though there is a fear about a situation where distortion occurs in an entire of the boot 1 due to a thermal influence upon soldering or the like, the above-mentioned situation is prevented owing to the above-mentioned laser welding method.

Note that, in the above, the description is made of the case where both of the smaller-diameter end portion 2 of the boot 1 and the larger-diameter end portion 3 are respectively fixed by the laser welding method to the shaft 17 and the outer joint member 11, which serve as the mating members thereof. The above-mentioned mounting structure may be adopted to only a side of the smaller-diameter end portion 2 of the boot 1 or only a side of the larger-diameter end portion 3. Even when the mounting structure is adopted to any one of the side of the smaller-diameter end portion 2 of the boot 1 and the side of the larger-diameter end portion 3 as described above, a sufficient reduction in cost can be achieved in comparison with the conventional structure.

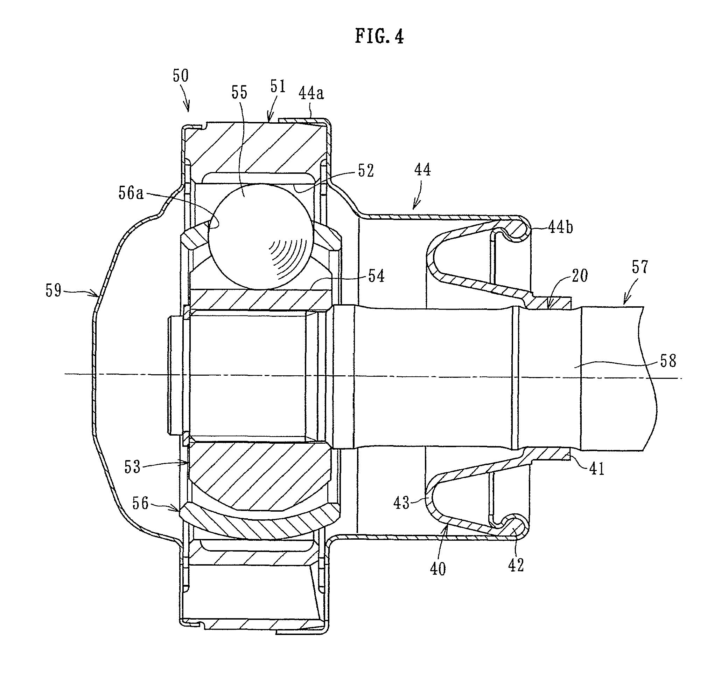

FIG. 4 illustrates a second embodiment of a constant velocity universal joint and a boot for a constant velocity universal joint, to which a mounting structure according to the present invention is adopted. The constant velocity universal joint 50 illustrated in the drawing has a substantially cylindrical shape. The constant velocity universal joint 50 mainly includes: an outer j oint member 51 serving as an outer member, which includes a plurality of track grooves 52 formed in an inner peripheral surface thereof; an inner joint member 53 including a plurality of track grooves 54 formed in an outer peripheral surface thereof; a plurality of balls 55 respectively arranged in ball tracks formed through cooperation of the track grooves 52 of the outer joint member 51 and the track grooves 54 of the inner joint member 53; and a cage 56 including pockets 56a for retaining the balls 55 rotatably. To an inner periphery of the inner joint member 53, a metal shaft 57 is coupled through intermediation of the torque transmission means such as the serration or the spline so as to allow torque transmission. The shaft 57 and the inner joint member 53 constitute an inner member. One end of the outer joint member 51 is sealed by an end cap 59. Meanwhile, the other end of the outer joint member 51 is sealed by a sealing device, the sealing device being formed of a boot 40 and a boot adapter 44. In this manner, preventing intrusion of foreign matters such as dust into a joint and preventing leakage of grease sealed inside the joint are achieved.

The boot 40 includes: a smaller-diameter end portion 41; a larger-diameter end portion 42; and an intermediate portion 43 connecting the smaller-diameter end portion 41 and the larger-diameter end portion 42. The boot 40 is, similarly to the boot 1 illustrated in FIG. 1, formed of the resin material mainly containing the thermoplastic elastomer, in particular, the polyester-based thermoplastic elastomer. Meanwhile, for example, the boot adapter 44 is formed of a metal material into a substantially cylindrical shape. The boot adapter 44 includes, at one end thereof, a flange 44a fixed to an outer peripheral surface of the outer joint member 51 by appropriate means such as caulking.

The shaft 57 is provided with a boot-mounting portion 58 having a smooth cylindrical surface shape at a position to which the shaft protrudes by a predetermined amount from the outer joint member 51. Further, an inner peripheral surface of the smaller-diameter end portion 41 of the boot 40 is integrally bonded to an outer peripheral surface of the boot-mounting portion 58 of the shaft 57 in an abutting state due to a physical interaction between the resin constituting the boot 40 and the metal constituting the shaft 57. With this, the smaller-diameter end portion 41 of the boot 40 is fixed to the boot-mounting portion 58 of the shaft 57. Note that, a method of bonding the both conforms to FIG. 2 and FIG. 3, and hence detailed description thereof is omitted. The larger-diameter end portion 42 of the boot 40 is fixed by caulking to one end on a side opposite to the flange 44a (end portion 44b) of the boot adapter 44.

By adopting the above-mentioned mounting structure, similarly to the first embodiment, without improving the shapes of the smaller-diameter end portion 41 of the boot 40 and the boot-fixing portion 58 of the shaft 57, which are to be fixed to each other, it is possible to fix the both to each other with high strength. In addition, the above-mentioned fixing with high strength can be performed easily and accurately. Further, it is possible to omit the boot band. Still further, it is possible to simplify the shape of the boot 40 along with omission of the boot band, specifically, the shape of the outer peripheral surface of the smaller-diameter end portion 41 of the boot 40. Therefore, with this regard, a reduction in cost of the constant velocity universal joint of this type is achieved.

Note that, though illustration is omitted, it is also possible to use, as the shaft 17, 57 described above, one which includes an anti-corrosive film such as a phosphate film, which is formed at least on a surface of the boot-mounting portion 18, 58. In this case, the anti-corrosive film is formed by subjecting at least the surface of the boot-mounting portion 18, 58 to rustproofing such as Parkerizing. When the above-mentioned structure is adopted, it is possible to further enhance a fixing strength for the boot with respect to the shaft.

In the same point of view, in particular in the embodiment illustrated in FIG. 1, it is also possible to use the outer joint member 11 including an anti-corrosive film such as a phosphate film, which is formed at least on a surface of the boot-mounting portion 19 by subjecting at least the surface of the boot-mounting portion 19 to rustproofing.

As described above, though the embodiments of the present invention are described, it is needless to say that the present invention is not limited to any of the above-mentioned embodiments, and the present invention may be implemented in further various types within a range without departing from the gist of the present invention. The scope of the present invention is defined by the claims, and encompasses meaning equivalent to the matters described in the claims and all modifications thereof within the range.

### Brief Description of Drawings

[FIG. 1] A sectional view illustrating a state in which a boot is mounted onto a constant velocity universal joint in a first embodiment of the present invention.
[FIG. 2] A view schematically illustrating a mounting step for a boot.
[FIG. 3A] A view schematically illustrating a forming process for a bonded portion.
[FIG. 3B] A view schematically illustrating a forming process for a bonded portion.
[FIG. 4] A sectional view illustrating a state in which a boot is mounted onto a constant velocity universal joint in a second embodiment of the present invention.
[FIG. 5] A sectional view illustrating a conventional structure in a state in which a boot is mounted onto a constant velocity universal joint.

### Reference Signs List

- 1: boot (boot for constant velocity universal joint)
- 2: smaller-diameter end portion
- 3: lager-diameter end portion
- 10: constant velocity universal joint
- 11: outer joint member
- 13: inner joint member
- 15: ball
- 16: cage
- 17: shaft
- 18, 19: boot-mounting portion
- 20: bonded portion
- 30: laser irradiation device
- 31: laser beam
- 32: clamping mechanism

## Claims

1. A mounting structure for a boot for a constant velocity universal joint, comprising a resin boot including an end portion that is fixed to a mating member thereof made of a metal,
wherein, due to a physical interaction between a resin constituting the resin boot and the metal constituting the mating member, a mounting surface of the end portion of the resin boot is integrally bonded to a surface to be mounted of the mating member in an abutting state.

2. A mounting structure for a boot for a constant velocity universal joint according to claim 1, wherein:
the constant velocity universal joint comprises an outer member and an inner member, which are provided to be allowed to be displaced relative to each other; and
the mating member comprises the inner member.

3. A mounting structure for a boot for a constant velocity universal joint according to claim 1, wherein:
the constant velocity universal j oint comprises an outer member and an inner member, which are provided to be allowed to be displaced relative to each other; and
the mating member comprises the outer member.

4. A mounting structure for a boot for a constant velocity universal joint according to claim 1,
wherein the resin constituting the resin boot comprises a thermoplastic elastomer.

5. A mounting structure for a boot for a constant velocity universal joint according to claim 1,
wherein the surface to be mounted of the mating member is subjected to rustproofing.

6. Amanufacturingmethod for a constant velocity universal joint, comprising, when an end portion of a resin boot is fixed to a mating member thereof made of a metal, causing a physical interaction between the resin constituting the resin boot and the metal constituting the mating member, to thereby bond and integrate a mounting surface of the end portion of the resin boot to a surface to be mounted of the mating member in an abutting state.

7. A manufacturing method for a constant velocity universal joint according to claim 6,
wherein the mating member is irradiated with a laser, to thereby cause the physical interaction.
